# EUROPÄISCHE PATENTSCHRIFT

(11) **EP 3 494 366 B1**
(45) Veröffentlichungstag und Bekanntmachung des Hinweises auf die Patenterteilung: **15.07.2020**
(21) Anmeldenummer: 17751036.9
(22) Anmeldetag: 20.07.2017
(51) Int. Cl.: G01C 21/36, G06T 17/05, G06T 19/20

(54) **VERFAHREN ZUR KORREKTUR DES HÖHENMODELLS FÜR NAVIGATIONSGERÄTE AUF GRUND VON 3D-LANDMARKEN**
METHOD FOR THE CORRECTION OF ELEVATION MODELS FOR NAVIGATION DEVICES ON THE BASIS OF 3D-LANDMARKS
PROCÉDÉ POUR LA CORRECTION DES MODÈLES D'ÉLÉVATION BASÉ SUR DES POINTS DE REPÈRE EN 3D

(30) Priorität: 03.08.2016 DE 102016214301; 04.08.2016 DE 102016214410
(43) Veröffentlichungstag der Anmeldung: 12.06.2019
(73) Patentinhaber: Robert Bosch GmbH, 70442 Stuttgart (DE)
(72) Erfinder: OTTE, Dirk, 30880 Laatzen (DE)
(86) Internationale Anmeldenummer: PCT/EP2017/068317
(87) Internationale Veröffentlichungsnummer: WO 2018/024492

(56) Entgegenhaltungen:
- CN-A- 102 254 350
- DE-A1-102010 008 490
- DE-T5-112013 006 818
- US-A1- 2015 379 767

## Beschreibung

Die Erfindung betrifft ein Verfahren zur Korrektur eines Höhenmodells für Navigationsgeräte auf Grund von 3D-Landmarken gemäß Anspruch 1.

### STAND DER TECHNIK

In Navigationssystemen werden die Navigationsdaten dem Benutzer graphisch als Karten auf einem Display dargestellt. Auf den Karten sieht man Flächen wie Bebauungsflächen oder Wasserflächen, Linien wie Straßenlinien oder Eisenbahnlinien und Punkte wie eingetragene Restaurants oder Tankstellen.

In älteren Navigationsgeräten sind nur 2D-Ansichten möglich, bei denen die Karte orthogonal von oben dargestellt wird. In neueren Systemen gibt es jedoch auch 3D-Ansichten, in denen die Karte gekippt und perspektivisch dargestellt wird.

Damit ein realistischeres Landschaftsbild entsteht, enthalten diese Karten zusätzlich zur flächenbezogenen Ortsinformation ein Höhenmodel, das sogenannte DTM DigitalTerrainModell.

Aus der DE 11 2013 006 818 T5 ist eine Verarbeitungsvorrichtung zur Anpassung der Anzeigeinformationen von dreidimensionalen Modellen wie einem Gebäude in einer Höhenrichtung bekannt, wobei das Geländemodell dabei unverändert bleibt.

Aus der DE 10 2010 008 490 A1 ist ein Verfahren zur Anpassung von benachbarten dreidimensionalen Gebäudemodellen an das zugrundeliegende Geländemodell bekannt.

Aus der CN 102 254 350 A ist ein Verfahren bekannt, um ein Geländemodell an ein sich direkt darüber befindliches Objektmodell z.B. ein Gebäude anzupassen, indem die Höhenposition des Objektmodells dem darunter liegenden Geländemodell zugeordnet wird.

Aus der DE 10 2013 212 035 A1 ist weiterhin ein Verfahren zur Darstellung von in einer Kartendarstellung einer Navigationseinrichtung angezeigten dreidimensionalen Objekten bekannt, z.B. in der Umgebung einer angezeigten Route, wobei eine Änderung eines Gestaltungszustands der einzelnen Objekte durch eine Animation der Objekte erfolgt. Das beschriebene Verfahren und die Navigationseinrichtung zu dessen Durchführung weisen einen hohen Bedienungskomfort auf und ermöglichen eine Steigerung der Verkehrssicherheit.

Das damit bekannt gewordene Verfahren gibt dabei auch an, dass die Änderung der Gestaltung der einzelnen Objekte ein Höhenprofil wenigstens einiger der Objekte betrifft, z.B. einer Geländeformation, wobei in einer vereinfachten Darstellung der Objekte dieses Höhenprofil als eine transparente Gitterdarstellung mit einer Vielzahl von Rasterpunkten in einer Rastermatrix bzw. einem Liniengitter wiedergegeben wird. Obwohl für eine Geländeformation bevorzugt, ist diese Ausführungsform auch auf Bauwerke anwendbar. Dabei wird anstelle eines einfachen Absenkens der Höhe eines Objekts die Gestaltung desselben fließend in eine Gestaltung überführt, bei der die detailliert ausgeführte Kontur nur noch durch eine Gitterdarstellung, d.h. ein perspektivisch die ursprüngliche Kontur des Objekts nachzeichnendes Liniengitter, wiedergegeben wird.

Dieses Liniengitter ist für eine Darstellung darunter und/oder dahinter liegender Abschnitte von Verkehrslinien im Allgemeinen bzw. der Route im Besonderen oder auch von nicht vereinfachten, weiteren Objekten zumindest teilweise transparent. Insbesondere wird der Transparenzgrad oder auch ein Transparenzverlauf der Darstellung der Geländeformation bzw. der Bauwerke von einer wenigstens weitgehend undurchsichtigen Darstellung, in der die Geländeformation detailliert und perspektivisch dreidimensional wiedergegeben wird, bis zu einer wenigstens nahezu vollständig transparenten Darstellung, in der die Geländeformation nur noch durch das Liniengitter angedeutet wird, animiert verändert. Die Verkehrslinien, insbesondere die Route, können dabei als im Liniengitter schwebend dargestellt werden, wobei sie ihre Höhenprofile über der Kartenebene nicht ändern, oder sie können in die Kartenebene projiziert dargestellt werden. Wahlweise können auch die Objekte weiterhin dargestellt werden, detailliert oder vorzugsweise vereinfacht, ebenfalls wenigstens teilweise in die Kartenebene abgesenkt. Auch dieses Absenken der Objekte wie der Verkehrslinien in die Kartenebene wird animiert dargestellt.

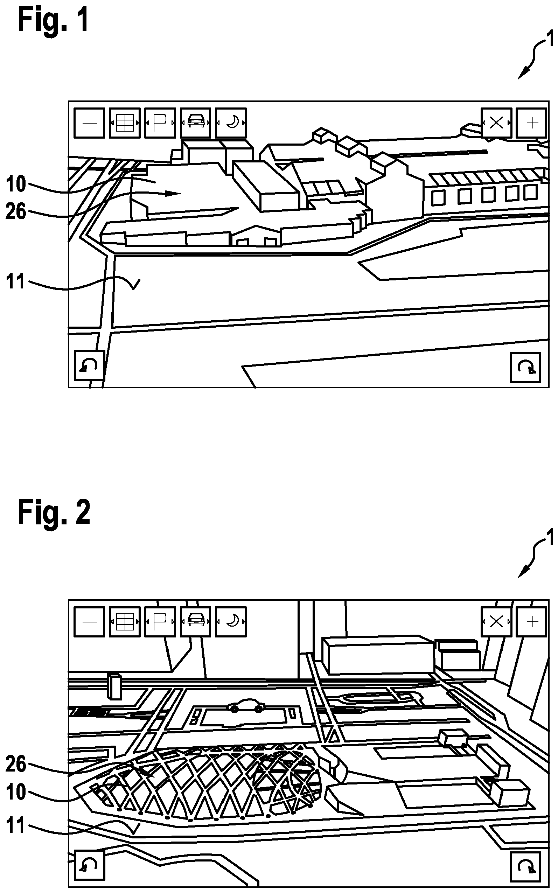

Figur 1 zeigt die Darstellung einer Navigationskarte 1 mit Höhenmodell gemäß dem Stand der Technik. Die Kartendarstellung weist Gebäude 10 auf, die in Form von einfachen Gebäudegrundrissen gezeigt sind. Neben den Gebäuden 10 und anderen sogenannten Landmarken 26 sind in den Kartendaten Höheninformationen hinterlegt, die mit zusätzlicher Texturinformation in den Navigationsdaten enthalten sind. Besonders markante Gebäude 10 werden als 3D-Landmarken 26 dargestellt.

Eines der Gebäude 10 bildet beispielsweise die 3D-Landmarke 26. Durch die Überlagerung von Höhenmodell und 3D-Landmarken 26 kann es allerdings Situationen geben, in denen für den Betrachter in der Anzeige die 3D-Landmarke 26 im Boden 11 zu versinken bzw. über dem Boden 11 zu schweben scheint.

Figur 1 zeigt ein solches Beispiel, und bei Betrachtung des Gebäudes 10 in der Grafik der Navigationskarte 1 ist festzustellen, dass dieses in den Boden 11 halbseitig abgesunken ist.

Die Kartendarstellung ist ein wesentliches Kriterium bei der Bewertung eines Navigationssystems, denn die Kartendarstellung ist der erste Eindruck, den ein Nutzer vom Navigationssystem bekommt. Systeme mit unschöner Kartendarstellung sind daher zu vermeiden. Insbesondere "versunkene" bzw. "fliegende" 3D-Landmarken sollten vermieden werden.

### OFFENBARUNG DER ERFINDUNG

Aufgabe der Erfindung ist die Bereitstellung eines Verfahrens, in der Anzeige eines Navigationsgerätes eine Karte mit Höheninformationen und Landmarken zu verbessern. Insbesondere soll das Abtauchen oder Schweben von Objekten vermieden werden.

Diese Aufgabe wird ausgehend von einem Verfahren gemäß Anspruch 1 mit den kennzeichnenden Merkmalen gelöst. Vorteilhafte Weiterbildungen des Verfahrens sind in den Unteransprüchen angegeben.

Die Erfindung löst die Aufgabe mit einem Verfahren zur Anzeige einer Navigationskarte für ein Navigationsgerät, wobei die Navigationskarte Ortskoordinaten anzeigt, denen ein Höhenprofil überlagert ist, und wobei die Karte weiterhin Landmarken aufweist, die in Verbindung mit dem Höhenprofil angezeigt werden, wobei das Verfahren zur Anzeige der Karte wenigstens die folgenden Schritte aufweist: Einlesen eines Höhenmodells in einen Arbeitsspeicher des Navigationsgerätes, Ermittlung jedes der Grundrisse der 3D-Landmarken, wonach bestimmt wird, welche Rasterpunkte des Höhenmodells von dem betreffenden Grundriss überdeckt werden, Korrektur des Höhenmodells an den Stellen, an denen diese von einer 3D-Landmarke überdeckt werden, Ablesen der Höhenwerte der Rasterpunkte und wenigstens teilweise der die Rasterpunkte in der Matrix umgebenden acht weiteren Rasterpunkten, Errechnen eines Mittelwertes für den Höhenwert, Zuweisung des errechneten Höhenwertes an alle Rasterpunkte, die von der betreffenden 3D-Landmarke überdeckt werden, und Zuweisung des errechneten Höhenwertes an alle Rasterpunkte, die den überdecken Rasterpunkten benachbart sind, sodass alle Rasterpunkte unter dem betreffenden Höhenmodell eine einheitliche Höhe aufweisen, um dieses in der Ebene zu glätten.

Im Ergebnis steht die 3D-Landmarke damit auf einer ebenen Fläche, weil alle von der Landmarke überdeckten Rasterpunkte des Höhenmodells und auch die Nachbarpunkte die gleiche Höhe haben.

Das Höhenmodell besteht im Wesentlichen aus einem gleichmäßigen rechteckigen Raster von Koordinaten, bei dem für jede Koordinate die Höhe gespeichert ist. Für das Höhenmodell werden sowohl die Ost-West- und die Nord-Süd-Ausdehnung als auch der Abstand der Rasterpunkte angegeben. Dadurch kann man sich die Position jedes einzelnen Rasterpunktes errechnen und braucht darum nicht mehr die Koordinate des Rasterpunktes, sondern nur noch seine Höhe zu speichern.

Eine 3D-Landmarke besteht aus Texturen, welche für die weitere Betrachtung nicht relevant sind, und 3D-Koordinaten. Die 3D-Koordinaten werden relativ zu einem Ankerpunkt gespeichert. Der Grundriss einer 3D-Landmarke lässt sich relativ einfach dadurch ermitteln, dass jede 3D-Koordinate auf die Ebene projiziert wird. Durch das Weglassen der z-Komponente ergibt sich also eine 2D-Koordinate. Für diese 2D-Koordinaten wird dann eine sogenannte konvexe Hülle bestimmt, welche in diesem Fall dem Grundriss der 3D-Landmarke entspricht. Eine konvexe Hülle einer Teilmenge ist dabei allgemein die kleinste konvexe Menge, die die Ausgangsmenge enthält.

Für die Implementierung der Erfindung werden also nun das Höhenmodell und alle 3D-Landmarken in den Arbeitsspeicher eingelesen. Die Höhenwerte der Rasterpunkte werden an den Stellen korrigiert, an denen sie von einer 3D-Landmarke überdeckt werden.

Dazu wird für jede 3D-Landmarke der Grundriss ermittelt, und es wird ermittelt, welche Rasterpunkte des Höhenmodells von diesem Grundriss überdeckt werden. Von diesen überdeckten Rasterpunkten und ihren jeweiligen acht Nachbarpunkten in der Rastermatrix werden die Höhenwerte abgelesen, und daraufhin wird ein Mittelwert für den Höhenwert errechnet. Dieser neu errechnete Höhenwert wird dann allen Rasterpunkten, die von dieser 3D-Landmarke überdeckt werden, und ihren jeweiligen acht Nachbarpunkten zugewiesen. Mit anderen Worten steht damit die 3D-Landmarke gerade, d.h. es erstreckt sich in Höhenrichtung orthogonal auf der gebildeten Ebene der Rasterpunkte.

Dadurch ist das Höhenmodell also genau an den Rasterpunkten, auf denen die 3D-Landmarke steht, geglättet. Die 3D-Landmarke steht damit auf einer ebenen Fläche, weil alle von ihm überdeckten Rasterpunkte des Höhenmodells und die Nachbarpunkte die gleiche Höhe haben.

Um die oben beschriebene Grundidee der Erfindung noch weiter zu verbessern, wird vor der Korrektur des Höhenwertes eines Rasterpunktes geprüft, ob dieser Rasterpunkt wegen einer weiteren nahe gelegenen 3D-Landmarke noch einmal korrigiert werden muss. In diesem Fall werden dann für die Berechnung des neuen Höhenmittelwertes die Höhenwerte aller beteiligten Rasterpunkte der beiden 3D-Landmarken verwendet. Und bei noch mehr beteiligten 3D-Landmarken werden ebenfalls alle Rasterpunkte berücksichtigt.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
Figur 1 eine Ansicht einer Navigationskarte eines Navigationsgerätes mit einem Gebäude, das in einem mit einem Höhenprofil angezeigten Boden versinkend dargestellt ist und
Figur 2 eine Ansicht einer Navigationskarte eines Navigationsgerätes mit einem Gebäude, das auf einem mit dem erfindungsgemäßen Verfahren korrigierten Höhenprofil gerade aufsteht und
Figur 3 eine schematische Darstellung eines Navigationsgerätes mit einer in diesem dargestellte Navigationskarte.

Figur 1 zeigt eine Ansicht einer Navigationskarte 1 eines Navigationsgerätes mit einem Gebäude 10, das in einem mit einem Höhenprofil angezeigten Boden 11 versinkend dargestellt ist, wie in der Einleitung bereits beschrieben.

Figur 2 zeigt eine Ansicht eines mit dem erfindungsgemäßen Verfahren korrigierten Höhenprofils der Aufstandsfläche unterhalb des Gebäudes 10. Der Boden 11 unter dem Gebäude 10 ist dabei so korrigiert worden, dass die Aufstandsfläche eben ist und das Gebäude 10 folglich gerade steht.

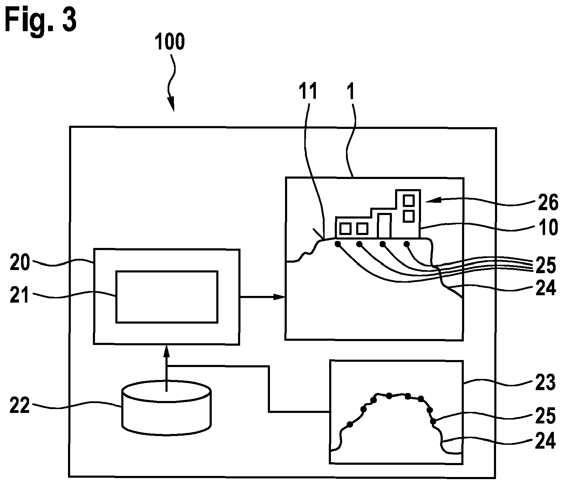

Das in Figur 3 schematisch dargestellte Navigationsgerät 100 weist eine Recheneinheit 20 auf, die einen Arbeitsspeicher 21 umfasst. Weiterhin ist ein Datenspeicher 22 im Navigationsgerät 100 vorhanden, aus dem ein Höhenmodell 23 mit einem Höhenprofil 24 für ein beispielsweise aktuell befahrenes Gebiet in den Arbeitsspeicher 21 hochgeladen wird. Das Höhenprofil 24 ist dabei aus einer Vielzahl in einem Rasternetz gebildeten Rasterpunkten 25 gebildet, denen jeweils eine separate Höheninformation zugeordnet ist. Die Höhenwerte der Rasterpunkte 25 werden an den Stellen korrigiert, an denen diese von einer 3D-Landmarke 26 überdeckt werden, wobei die 3D-Landmarke 26 beispielsweise von einem Gebäude 10 gebildet ist.

Das Verfahren läuft dabei so ab, dass zunächst das Höhenmodell 23 in den Arbeitsspeicher 21 des Navigationsgerätes 100 eingelesen wird. Anschließend erfolgt eine Ermittlung jedes der Grundrisse der 3D-Landmarken 26, wonach bestimmt wird, welche Rasterpunkte 25 des Höhenmodells 23 von dem betreffenden Grundriss überdeckt werden, wonach eine Korrektur des Höhenmodells 23 an den Stellen folgt, an denen diese von einer 3D-Landmarke 26 überdeckt werden. Anschließend folgt ein Ablesen der Höhenwerte der Rasterpunkte 25 und wenigstens teilweise der die Rasterpunkte 25 umgebenden acht weiteren Rasterpunkten 25. Schließlich wird ein Mittelwert für den Höhenwert errechnet, und es erfolgt eine Zuweisung des errechneten Höhenwertes an alle Rasterpunkte 25, die von der betreffenden 3D-Landmarke 26 überdeckt werden. Auch erfolgt eine Zuweisung des errechneten Höhenwertes an alle Rasterpunkte 25, die den überdecken Rasterpunkten 25 benachbart sind, sodass alle Rasterpunkte 25 unter dem betreffenden Höhenmodell 23 eine einheitliche Höhe aufweisen, um dieses in der Ebene bzw. zu einem Plateau zu glätten. Im Ergebnis steht das Gebäude 10, das die 3D-Landmarke 26 bildet, auf dem Höhenplateau gerade auf und wird in der Navigationskarte 1 korrekt dargestellt.

Ein Vergleich des Höhenprofils 24 aus dem Höhenmodell 23, das aus dem Datenspeicher 22 in den Arbeitsspeicher 21 hochgeladen wird, mit dem korrigierten - und ansonsten selbigen- Höhenmodell 23 zeigt, dass das korrigierte Höhenmodell 23 ein Plateau bildet, auf dem das Gebäude 10 zur Bildung der 3D-Landmarke 26 aufsteht. Alle Rasterpunkte 25 und auch die den Rasterpunkten 25 benachbarten Rasterpunkte (nicht gezeigt) weisen dieselbe korrigierte Höheninformation auf.

## Patentansprüche

1. Verfahren zur Anzeige einer Navigationskarte (1) für ein Navigationsgerät (100), wobei die Navigationskarte (1) Ortskoordinaten anzeigt, denen ein Höhenprofil (24) überlagert ist, und wobei die Navigationskarte (1) weiterhin 3D-Landmarken (26) aufweist, die in Verbindung mit dem Höhenprofil (24) angezeigt werden, wobei das Verfahren zur Anzeige der Karte wenigstens die folgenden Schritte aufweist:
- Einlesen eines Höhenmodells (23) in einen Arbeitsspeicher (21) des Navigationsgerätes (100),
- Ermittlung jedes der Grundrisse der 3D-Landmarken (26), wonach bestimmt wird, welche Rasterpunkte (25) des Höhenmodells (23) von dem betreffenden Grundriss überdeckt werden, durch wenigstens die folgenden Schritte gekennzeichnet:
- Korrektur des Höhenmodells (23) an den Stellen, an denen diese von einer 3D-Landmarke (26) überdeckt werden,
- Ablesen der Höhenwerte der Rasterpunkte (25) und wenigstens teilweise der die Rasterpunkte (25) umgebenden acht weiteren Rasterpunkten (25),
- Errechnen eines Mittelwertes für den Höhenwert,
- Zuweisung des errechneten Höhenwertes an alle Rasterpunkte (25), die von der betreffenden 3D-Landmarke (26) überdeckt werden,
- Zuweisung des errechneten Höhenwertes an alle Rasterpunkte (25), die den überdecken Rasterpunkten (25) benachbart sind, sodass alle Rasterpunkte (25) unter dem betreffenden Höhenmodell (23) eine einheitliche Höhe aufweisen, um dieses in der Ebene zu glätten.

2. Verfahren nach Anspruch 1, **dadurch gekennzeichnet, dass** vor der Korrektur des Höhenwertes eines Rasterpunktes geprüft wird, ob dieser Rasterpunkt wegen einer weiteren nahe gelegenen 3D-Landmarke noch einmal korrigiert werden muss.

3. Verfahren nach Anspruch 2, **dadurch gekennzeichnet, dass** bei einer weiteren 3D-Landmarke (26) für die Berechnung eines korrigierten, neuen Höhenmittelwertes die Höhenwerte aller beteiligten Rasterpunkte (25) der beiden 3D-Landmarken (26) verwendet werden.

4. Verfahren nach Anspruch 3, **dadurch gekennzeichnet, dass** bei mehreren 3D-Landmarken (26) für die Berechnung eines gemeinsamen Höhenmittelwertes die Höhenwerte aller beteiligten Rasterpunkte (25) der mehreren 3D-Landmarken (26) verwendet werden.

5. Navigationsgerät (100) eingerichtet zur Ausführung eines Verfahrens nach einem der Ansprüche 1 bis 4.

## Claims

1. Method for displaying a navigation map (1) for a navigation appliance (100), wherein the navigation map (1) displays location coordinates on which an elevation profile (24) is overlaid, and wherein the navigation map (1) furthermore has 3D landmarks (26) that are displayed in conjunction with the elevation profile (24), wherein the method for displaying the map has at least the following steps:
- reading an elevation model (23) into a main memory (21) of the navigation appliance (100),
- ascertaining each of the outlines of the 3D landmarks (26), after which it is determined which grid points (25) of the elevation model (23) are covered by the relevant outline, **characterized by** at least the following steps:
- correcting the elevation model (23) at the points at which said grid points are covered by a 3D landmark (26),
- reading off the elevation values of the grid points (25) and of at least some of the eight further grid points (25) surrounding the grid points (25),
- calculating a mean value for the elevation value,
- assigning the calculated elevation value to all grid points (25) that are covered by the relevant 3D landmark (26),
- assigning the calculated elevation value to all grid points (25) that are adjacent to the covered grid points (25), so that all grid points (25) below the relevant elevation model (23) have a uniform elevation in order to smooth the level of said elevation model.

2. Method according to Claim 1, **characterized in that** the correcting of the elevation value of a grid point is preceded by checking being performed to ascertain whether said grid point needs to be corrected again on account of another nearby 3D landmark.

3. Method according to Claim 2, **characterized in that** if there is another 3D landmark (26) then the elevation values of all involved grid points (25) of the two 3D landmarks (26) are used for calculating a corrected, new elevation mean value.

4. Method according to Claim 3, **characterized in that** if there are multiple 3D landmarks (26) then the elevation values of all involved grid points (25) of the multiple 3D landmarks (26) are used for calculating a common elevation mean value.

5. Navigation appliance (100) configured to carry out a method according to one of Claims 1 to 4.

## Revendications

1. Procédé pour l'affichage d'une carte de navigation (1) pour un appareil de navigation (100), dans lequel la carte de navigation (1) affiche des coordonnées de lieu, auxquelles est superposé un profil de hauteurs (24), et dans lequel la carte de navigation (1) présente en outre des points de repère en 3D (26), qui sont affichés en relation avec le profil de hauteurs (24), dans lequel le procédé pour l'affichage de la carte comporte au moins les étapes suivantes :
- la lecture d'un modèle de hauteurs (23) dans une mémoire de travail (21) de l'appareil de navigation (100),
- la détermination de chacune des sections horizontales des points de repère en 3D (26) permettant de déterminer les points de grille (25) du modèle de hauteurs (23) qui sont recouverts par la section horizontale concernée, **caractérisé par** au moins les étapes suivantes :
- la correction du modèle de hauteurs (23) aux endroits où ceux-ci sont recouverts par un point de repère en 3D (26),
- la lecture des valeurs de hauteur des points de grille (25) et au moins en partie des huit autres points de grille (25) entourant les points de grille (25),
- le calcul d'une moyenne pour la valeur de hauteur,
- l'affectation de la valeur de hauteur calculée à tous les points de grille (25) qui sont recouverts par le point de repère en 3D (26) concerné,
- l'affectation de la valeur de hauteur calculée à tous les points de grille (25) qui sont voisins des points de grille recouverts (25) de sorte que tous les points de grille (25) situés en dessous du modèle de hauteurs (23) concerné présentent une hauteur uniforme pour lisser ceux-ci dans le plan.

2. Procédé selon la revendication 1, **caractérisé en ce qu'**avant la correction de la valeur de hauteur d'un point de grille, il est vérifié si ce point de grille doit être corrigé à nouveau en raison d'un autre point de repère en 3D situé à proximité.

3. Procédé selon la revendication 2, **caractérisé en ce que**, dans le cas d'un autre point de repère en 3D (26), les valeurs de hauteur de tous les points de grille (25) impliqués des deux points de repère en 3D (26) sont utilisées pour le calcul d'une nouvelle moyenne de hauteur corrigée.

4. Procédé selon la revendication 3, **caractérisé en ce que**, dans le cas d'une pluralité de points de repère en 3D (26), les valeurs de hauteur de tous les points de grille (25) impliqués de la pluralité de points de repère en 3D (26) sont utilisées pour le calcul d'une moyenne de hauteur commune.

5. Appareil de navigation (100) conçu pour mettre en œuvre un procédé selon l'une des revendications 1 à 4.
